# EUROPÄISCHE PATENTSCHRIFT

(11) **EP 0 777 992 B1**
(45) Veröffentlichungstag und Bekanntmachung des Hinweises auf die Patenterteilung: **23.09.1998**
(21) Anmeldenummer: 96119279.6
(22) Anmeldetag: 02.12.1996
(51) Int. Cl.: A47J 37/04

(54) **Grill mit einem motorisch drehbaren Fleischspiess**
Grill with a motor driven meat stick
Gril avec une brochette à viande motorisée

(30) Priorität: 07.12.1995 DE 19545699
(43) Veröffentlichungstag der Anmeldung: 11.06.1997
(73) Patentinhaber: Gül, Tevfik, 63303 Dreieich (DE)
(72) Erfinder: Gül, Tevfik, 63303 Dreieich (DE)
(74) Vertreter: Schubert, Siegmar, Dipl.-Ing.

(56) Entgegenhaltungen:
- EP-A- 0 153 148
- AU-B- 427 555
- DE-A- 3 104 636
- DE-A- 3 410 766
- GB-A- 2 218 327
- GB-A- 2 271 274
- US-A- 4 245 148
- US-A- 4 300 443
- US-A- 5 251 543

## Beschreibung

Die Erfindung betrifft einen Grill mit einem motorisch drehbaren Fleischspieß für Gyros oder dergleichen mit einem parallel zu dem Fleischspieß motorisch verfahrbaren Messer, welches geeignet ist, äußere Schichten von auf den Fleischspieß gespießtem Fleisch abzutrennen, wobei ein radialer Abstand zwischen dem Fleischspieß und dem Messer motorisch einstellbar ist und wobei ein mit einem Messerhalter in Verbindung stehender Messerabstandsensor und eine Messerbetätigungssteuereinrichtung vorgesehen sind.

Solche Grills sind bekannt, zum Beispiel aus der europäischen Patentanmeldung 0 153 148. Sie dienen zur Herstellung von sogenanntem Gyros- oder Döner-Fleisch, wobei es darauf ankommt, jeweils nur die äußeren Schichten eines auf einen motorisch drehbaren Fleischspieß aufgespießten Fleischballens zu grillen und die fertiggegarten Schichten mittels eines Messer oder dergleichen abzutragen. Das manuelle Abtragen der fertigen Schichten mittels eines Messers erfordert Zeit und gewisses Geschick, um Stücke möglichst gleichmäßiger Dicke abzutragen und dabei weder noch nicht gegrilltes Fleisch abzuschneiden, noch bereits gegrilltes Fleisch zu lange auf dem Spieß zu belassen. Ein gemäß der genannten europäischen Patentanmeldung ausgebildeter Grill vereinfacht das Abtragen durch Bereitstellung einer automatischen Abschneidevorrichtung, welche nach manueller Auslösung oder in vorgegebenen Zeitabständen an dem aufgespießten Fleischballen entlangfährt und dabei äußere Schichten abträgt.

Da aber die zu grillenden Fleischballen immer wieder neu aus unterschiedlichen Naturprodukten, meist Lamm - oder Schweinefleisch, seltener auch Geflügel sowie Zwiebeln und verschiedenen Gewürzen hergestellt werden, ist das Garverhalten nie exakt vorausbestimmbar, so daß auch bei dem bekannten Grill mit automatischer Abschneidevorrichtung der Fleischballen beobachtet werden muß, will man das Verbrennen zu lange an dem Fleischballen belassener Schichten oder das Abschneiden noch halb roher Schichten vermeiden. Hinzu kommt, daß die radiale Ausdehnung der Fleischballen entlang der Achse des Fleischspießes während des Grillvorganges selbst nach dem vorübergehend eine gewisse Konstanz bewirkenden Abschneiden der äußeren Schichten stets schwankt, da sich der Fleischballen an manchen Stellen stärker zusammenzieht als an anderen, so daß die Abtragung von Fleisch in gleichmäßiger Dicke bei dem bekannten Grill nicht sichergestellt werden kann.

Davon ausgehend liegt der Erfindung die Aufgabe zugrunde, durch Weiterbildung eines Grills der eingangs genannten Art den Herstellungsprozeß weiter zu automatisieren und insbesondere die Qualität des abgetragenen Fleisches sowohl hinsichtlich des optimalen Abschneidezeitpunktes als auch hinsichtlich seiner Dicke zu verbessern.

Die Aufgabe wird durch Ausbildung des Grills mit den in dem kennzeichnenden Teil des Anspruchs 1 angegebenen Merkmalen gelöst.

Bei der erfindungsgemäßen Lösung handelt es sich um einem vollautomatisch bräunungsgesteuerten, selbstschneidenden Grillapparat, der zum Schneiden kein Fachpersonal benötigt. Die Schneidvorgänge werden selbsttätig durch den Bräunungssensor und die Messerbetätigungssteuerungseinrichtung ausgelöst, durch welche die Bewegungsvorgänge des Messers und des Messerhalters, mit dem der Grill in der Anspruch 1 definierten Weise aufgebaut ist, zum schichtweisen Abtrennen des garen Fleisches gesteuert werden. Es wird eine große Produktionsrate geschnittenen Gyros gleichbleibenden Gargrads und konstanter Dicke zuverlässig erzielt.

Weitere vorteilhafte Merkmale sind in den Unteransprüchen 2 - 12 angegeben.

Im einzelnen sind nach Anspruch 2 in der Längsbewegungsbahn des Messerhalters Endschalter angeordnet, die an einen Eingang einer Messerbestätigungssteuereinrichtung angeschlossen sind, wobei die Messerbestätigungssteuereinrichtung dergestalt ausgebildet ist, daß das Fahren des Messerhalters in Längsrichtung umgesteuert, d.h. umgekehrt wird, wenn der Messerhalter einen vorgegebenen Abstand zu dem Endschalter erreicht, beispielsweise diesen Endschalter berührt. Als Endschalter können insbesondere Magnetschalter vorgesehen sein, die eine kontaktlose Steuerung ermöglichen. Mit den Endschaltern wird also eine hin- und hergehende Bewegung des Messer entlang dem aufgespießten Fleisch erreicht, wodurch bei einer geeigneten Ausbildung des Messers in beiden Längsbewegungsrichtungen äußere gare Fleischschichten abgetrennt werden.

Dazu ist vorzugsweise das Messer nach Anspruch 5 als ein Rotiermesser ausgebildet.

Zum Schneiden wird das Messer zusammen mit dem Messerhalter aus seiner von dem Fleisch bzw. Fleischspieß entfernten Ruhestellung gemäß Anspruch 3 in Richtung auf das Fleisch bzw. den Messerhalter verfahren. Mit anderen Worten ist der radiale Abstand zwischen dem Messer und dem mit einem ersten Motor drehbaren Fleischspieß über ein Schneckengetriebe durch einen zweiten Motor einstellbar. Der erste Motor ist nach dem Stand der Technik im Prinzip zum Drehen des Fleischspießes üblich, nicht aber der zweite zweite Motor zum selbsttätig gesteuerten Heranführen des Messers an das Fleisch.

Die Messerbewegung in Längsrichtung, d.h. parallel zu dem Fleischspieß, erfolgt besonders vorteilhaft nach Anspruch 4 dadurch, daß der Messerhalter auf einer parallel zu dem Fleischspieß angeordneten ortsfesten Führungsschiene verschiebbar ist, daß an dem Messerhalter ein Seilzug angebracht ist, der über zwei Umlenkrollen umgelenkt und mit einem dritten Motor verbunden ist, der von der Messerbetätigungseinrichtung gesteuert den Messerhalter mit dem Messer in Längsrichtung verfährt.

In einer Weiterbildung des Grills ist der Fleischspieß nach Anspruch 6 in zwei Seitenrahmenteilen gelagert, während parallel in einem Abstand zu dem Fleischspieß in an sich bekannter Weise eine beheizbare Grillplatte angeordnet ist, mit der Besonderheit, daß die beiden Seitenrahmenteile Führungen aufweisen, in denen der Fleischspieß zur Veränderung seines Abstands zu der Grillplatte motorisch verschoben werden kann. Damit kann der Bräunungsgrad bzw. die Geschwindigkeit, mit der die äußere Schicht des Fleisches gebräunt und gegart wird, variiert werden.

Im einzelnen ist dazu je ein Lager an einem Ende des Fleischspießes in je einer Nut in jedem Seitenrahmenteil verschiebbar, wobei jedes Lager mit einer geschlossenen Seilwinde in Verbindung steht, die mit einem Seilwindenmotor antreibbar ist.

Die Steuerung des Bräunungsgrades erfolgt gemäß Anspruch 8 unter Zugrundelegung der geschilderten mechanischen Konstruktion dadurch, daß jeder Seilwindenmotor von einer elektronischen Bräunungsgradsteuereinrichtung gesteuert ist, deren Eingang mit dem auf den Fleischspieß gerichteten Bräunungssensor beaufschlagt wird.

Die Lösbarkeit des Fleischspießes von dem ihn antreibenden Motor bleibt trotz der Verstellbarkeit des Fleischspießes gegenüber der Grillplatte dadurch erhalten, daß der erste, den Fleischspieß drehende Motor über ein Zahnradgetriebe mit dem Fleischspieß lösbar gekuppelt ist, wobei der erste Motor zusammen mit dem Fleischspieß gegenüber der Grillplatte den Abstand zu dieser verändernd verschoben werden kann.

Vorteilhaft weist der Grill nach Anspruch 10 ein im wesentlichen geschlossenes Gehäuse auf, welches eine Lüftungsöffnung sowie eine öffenbare Glashaube umfaßt. Das Gehäuse ist hier besonders sinnvoll, da die Schneidvorgänge, wie geschildert, selbsttätig verlaufen, d.h. nicht von außen relativ häufig mit einem Messer das in seiner äußeren Schicht gare Fleisch erreicht werden muß. Es ist vielmehr nur notwendig, das Gehäuse zu öffnen, wenn selbsttätig geschnittenes Fleisch entfernt werden soll oder aber frisches Fleisch auf den Fleischspieß gespießt wird, wozu der Spieß durch die öffenbare Glashaube entnommen werden kann. Für Reinigungszwecke ist es außerdem zweckmäßig, die Grillplatte aufklappbar zu gestalten.

Besonders vorteilhaft weist der Grill nach Anspruch 11 die Merkmale auf, daß wenigstens ein von außerhalb des Gehäuses betätigbares Einstellorgan vorgesehen ist, welches mit der Drehsteuereinrichtung elektrisch verbunden ist und mit dem verschiedene Drehgeschwindigkeiten des ersten, mit dem Fleischspieß gekuppelten Motors eingestellt werden können. Wie weiter unten dargestellt werden vorteilhaft sechs verschiedene Geschwindigkeitsstufen gekoppelt an Hitzegrad und Abstand zu der Heizplatte von außen wahlweise eingestellt.

Zusätzlich kann nach Anspruch 12 ein Einstellorgan, welches von außerhalb des Gehäuses erreichbar ist, an einen Eingang der Bräunungsgradsteuereinrichtung angeschlossen sein, so daß nicht nur die Drehgeschwindigkeit, sondern auch der Abstand des Fleischspießes zu der Grillplatte von außen beeinflußbar ist.

Die Erfindung wird im folgenden anhand eines Ausführungsbeispiels mit zwei Figuren erläutert. Es zeigen:
- Fig. 1: eine Seitenansicht auf den Grill aus der Richtung A in Fig. 2 und
- Fig. 2: eine Draufsicht auf den Grill ohne Gehäuse.

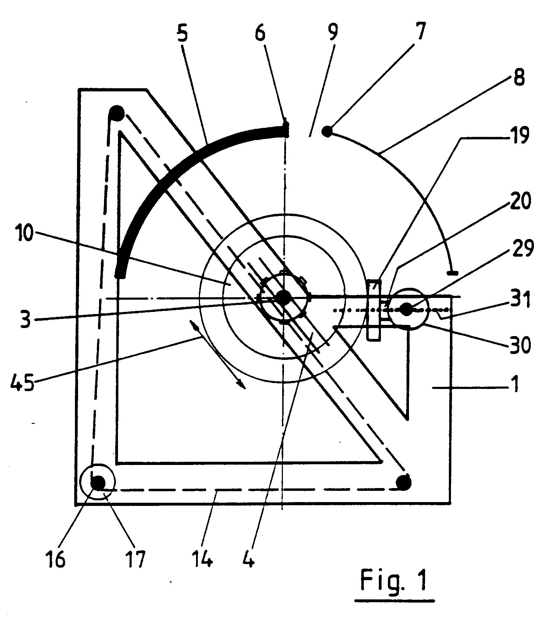

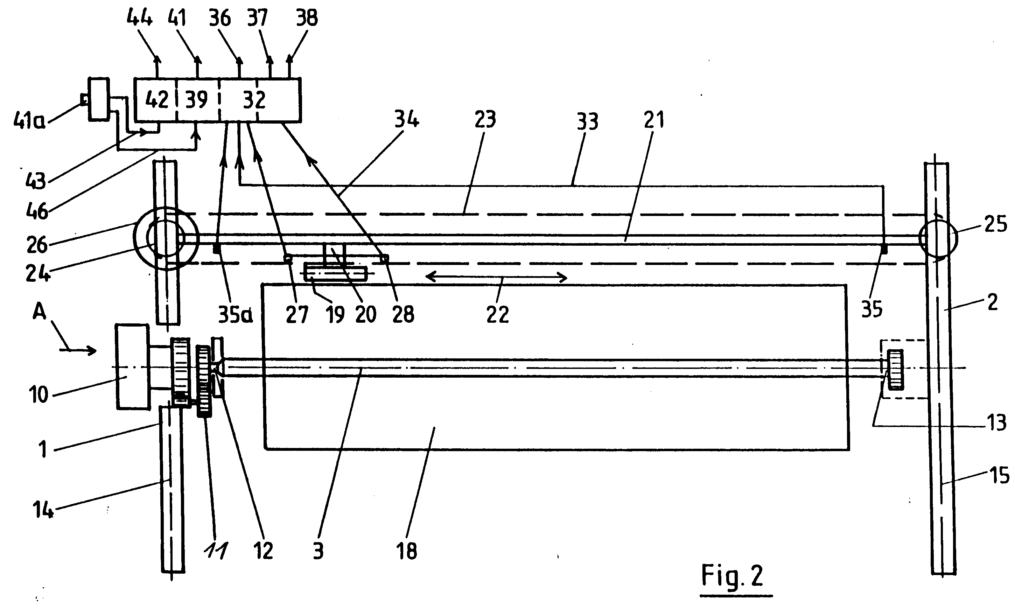

Aus den Figuren 1 und 2 sind zwei Seitenrahmenteile 1 und 2 ersichtlich, die als Hauptträger eines waagerecht angeordneten Fleischspießes 3 dienen. Die beiden im gegenseitigen Abstand zueinander angeordneten Seitenrahmenteile weisen Führungen, z.B. in Form einer schrägen Nut 4 auf, in denen der Fleischspieß 3 zur Veränderung seines Abstands zu einer ihm gegenüber parallel angeordneten gewölbten Grillplatte 5 geführt ist. Die Grillplatte 5 kann in der Zeichnung nicht dargestellte Infrarotstrahler umfassen. Die Anordnung der Grillplatte zu dem Fleischspieß ist so eingerichtet, daß sich der Fleischspieß im wesentlichen in einer Brennlinie der gekrümmten Grillplatte befindet. Sowohl die Grillplatte als auch eine ihr gegenüber angeordnete Glashaube können um je ein Scharnier 6 bzw. 7 geschwenkt, d.h. hochgeklappt werden, um das Innere des Grills, beispielsweise zur Entnahme des Fleischspießes oder des Einsetzens des Fleischspießes mit aufgespießtem Fleisch oder zum Reinigen zugängig zu machen. Die Glashaube 8 ist Bestandteil eines nicht dargestellten Gehäuses, welches oben eine Lüftungsöffnung 9 aufweist, im übrigen aber im wesentlichen geschlossen ist.

Ein den Fleischspieß in Drehbewegung versetzender Motor 10 steht mit dem Fleischspieß 3 über ein zumindest teilweise offenes Getriebe 11 in Verbindung, dergestalt, daß der Fleischspieß 3 von dem Getriebe getrennt werden kann, um Fleisch aufzuspießen. Im gekuppelten Zustand des Getriebes und des Motors sind diese Elemente gemeinsam in Richtung der Führung 4 verschiebbar.

Zur motorischen Einstellung des Abstands zwischen dem Fleischspieß 3 und der Grillplatte 5 dient je eine geschlossene Seilwinde 14 bzw. 15, die in je einem Seitenrahmenteil 1 bzw. 2 umlaufend angeordnet sind. Beide Seitenrahmenteile 1, 2, können geschlossen sein. Der Antrieb der Seilwinden erfolgt über je eine Antriebsrolle, z.B. 16 in Fig. 1, die mit einem vierten Motor 17 verbunden sind. Auf einen zweiten und einen dritten Motor sowie auf die Steuerung des vierten Motors 17 wird weiter unten eingegangen.

Zum selbsttätigen Schneiden der äußeren garen Fleischschicht bzw. der äußeren Fleischkruste des Fleisches, welches auf den Fleischspieß 3 geschoben ist und welches schematisch bei 18 angedeutet ist, dient ein Rotiermesser 19, welches in einem Messerhalter 20 auf einer Führungsschiene 21 verschiebbar gelagert ist. Die Verschieberichtung bzw. Längsbewegungsbahn parallel zu dem Fleischspieß 3 ist mit dem Doppelpfeil 22 angedeutet. Die Führungsschiene 21 ist zwischen den beiden seitenrahmenteilen 1 und 2 ortsfest an diesen angebracht. Zur Verschiebung des Messerhalters 20 mit dem Rotiermesser 19 dient ein geschlossener Seilzug 23, der über Umlenkrollen 24 und 25 an den Seitenrahmenteilen 1 und 2 geführt ist. Die Umlenkrolle 24 ist mit einem dritten Motor 26 gekuppelt.

Der Messerhalter trägt einen auf den Fleischspieß 3 bzw. das Fleisch 18 gerichteten Bräunungssensor 27, der als Infrarotsensor ausgeführt ist. Außerdem ist an dem Messerhalter 20 ein Messerabstandssensor 28 angebracht, der ebenfalls auf das Fleisch 18 bzw. in Richtung auf den Fleichspieß 3 ausgerichtet ist. Dieser Messerabstandssensor 28 kann als Infrarotsensor, aber auch als Ultraschallsensor ausgeführt sein.

Gemäß Fig. 1 ist das Rotiermesser 19 zusammen mit dem Messerhalter 20 über ein Schneckengetriebe 29 mit angeflanschtem zweiten Motor 30 in Richtung auf den Fleischspieß 3 bzw. das auf ihn gespießte Fleisch verschiebbar. Denkbare Positionen des Rotormessers 19 sind mit einer punktierten Linie 31 angedeutet.

Die rotierende Bewegung des Rotiermessers 19 wird mit einem Motor bewirkt, der zur Übersichtlichkeit der Darstellung in den Fig. 1 und 2 nicht gezeigt ist.

Zur Steuerung der Rotiermesserbetätigung ist eine elektronische Messerbestätigungssteuereinrichtung 32 vorgesehen, an deren Eingänge 33 und 34 der Bräunungssensor 27 bzw. Messerabstandssensor 28 angeschlossen sind. In der Bewegungsbahn des Messerhalters 20 sind an der Führungsschiene 21 Endschalter 35, 35a angeordnet, die als Magnetschalter ausgebildet sein können und mit einem weiteren, nicht bezeichneten Eingang der Messerbetätigungssteuereinrichtung 32 verbunden sind. Ausgänge 36, 37 und 38 der Messerbetätigungssteuereinrichtung 32 speisen den zweiten Motor 30, den dritten Motor 26 und den Rotiermessermotor. Weiterhin ist eine Drehsteuereinrichtung 39, vorgesehen, deren Eingang 46 mit mindestens einem Einstellorgan 41a in Verbindung steht, um die Drehgeschwindigkeit des Fleischspießes 3 über den ersten Motor 10 einzustellen. Dazu ist der Motor 10 an einen Ausgang 41 der Drehsteuereinrichtung 39 angeschlossen. Weiterhin ist eine Bräunungsgradsteuereinrichtung 42 vorgesehen, die wie die Drehsteuereinrichtung mit elektronischen Mitteln aufgebaut ist und mit dem Einstellorgan 41a zw. einem oder mehreren weiteren entsprechenden Einstellorganen an einem Eingang 43 verbunden ist. Ein zu dem vierten Motor führender Ausgang der Bräunungsgradsteuereinrichtung 42 ist mit 44 bezeichnet. Somit kann der Bräunungsgradsteuereinrichtung der Abstand zwischen dem Fleischspieß 3 und der beheizten Grillplatte 5 verändert werden, was mit dem Doppelpfeil 45 in Fig. 1 angedeutet ist.

Die Steuerung des beschriebenen Grills ist so aufgebaut, daß sie wie folgt abläuft:

Nach Aufspießen des Fleischs 18 auf den Fleischspieß 3 und Einsetzen des Fleischspießes in den Grill wird durch Betätigung des Einstellorgans 41a der erste Motor 10 mit der durch das Einstellorgan vorgegebenen Geschwindigkeit in Drehbewegung versetzt und die Grillplatte 5 eingeschaltet. Der daraufhin folgende Garvorgang der äußeren Schicht des Fleisches bis zum Entstehen einer Fleischkruste wird durch den Bräunungssensor 27 überwacht. Der gewünschte Bräunungsgrad kann ebenfalls mit dem Einstellorgan 41a vorgegeben werden. In Abhängigkeit von dem gewünschten Bräunungsgrad kann weiterhin der vierte Motor, d.h. der Seilwindenmotor 17, der den Abstand zwischen dem Fleischspieß 3 bzw. dem Fleisch 18 und der Grillplatte 5 einreguliert, verändert werden. Bei dem Abstand handelt es sich um einen bezüglich der Achse des Fleischspießes 3 radialen Abstand.

Der Grillvorgang verläuft so lange, bis der Bräunungssensor 27 einen Bräunungsgrad der äußeren Fleischkruste erfaßt, der dem mit dem Einstellorgan 41a vorgegebenen Bräununsgrad gleichkommt. In diesem Fall wird selbsttätig ein Schneidvorgang ausgelöst:

Dazu wird der zweite Motor 30 derart von dem Ausgang 36 der Messerbestätigungssteuereinrichtung 32 mit Energie versorgt, daß er eine Verschiebung des Messerhalters 20 mit Messer 19 auf das Fleisch 18 bzw. in Richtung auf den Fleischspieß 3 auslöst, bis von dem Messerabstandssensor 28 eine Eindringtiefe des Messers in das Fleisch 18 gemeldet wird, welche einer mit einem Einstellorgan ähnlich dem Einstellorgan 41a vorgebenen Eindringtiefe des Rotiermessers in das Fleisch gleich ist, und der zweite Motor 30 zunächst angehalten wird. Durch den Abstandssensor 28 gesteuert kann der Motor im weiteren Verlauf der Schneidbewegung das Rotiermessern 19 stets auf die gleiche Eindringtiefe in dem Fleisch 18 nachstellen. Der Schneidvorgang erfolgt weiterhin dadurch, daß von der Messerbetätigungssteuereinrichtung 32 über den Ausgang 37 der dritte Motor 26 an der Umlenkrolle 24 aktiviert wird, so daß das Rotiermesser 19 mit dem Messerhalter 20 entlang der Längsbewegungsbahn 22 gezogen wird. Die Bewegung des Rotiermessers 19 und des Messerhalters 20 wird über den Motor 26 jeweils umgekehrt, wenn der Messerhalter 20 an einen der Endschalter 35, 35a gelangt. Wenn die gebräunte äußere Fleischkruste entfernt ist, was mit dem Bräunungssensor 27 erfaßt wird, so fährt der zweite Motor 30 den Messerhalter 20 mit dem Rotiermesser 19 durch die Messerbetätigungssteuereinrichtung 32 gesteuert in die Ausgangslage entfernt von dem Fleischspieß 3 zurück, und der nicht dargestellte Motor, der das Rotiermesser 19 in Rotationsbewegung versetzt hat, stoppt.

Zu der Einstellung der Drehgeschwindigkeit des Fleischspießes 3, welche die Bräunung des Fleisches 18 beeinflußt, nach Maßgabe des mindestens einen Einstellorgans 41a und der Drehsteuereinrichtung 39, wird spezifiert, daß vorteilhaft sechs verschiedene Geschwindigkeitsstufen, gekoppelt an den Hitzegrad bzw. an den Abstand des Fleisches 18 oder des Grillspießes 3 zu der beheizten Grillplatte 5, über Einstellorgane wie dem Einstellorgan 41a vorgegeben werden kann. Darin eingeschlossen ist ein Hitzeerhaltunsgang, bei dem also keine weitere nennenswerte Bräunung eintritt. Damit ist auch die Produktionsgeschwindigkeit des gebräunten bzw. garen Fleisches abhängig von dem aktuellen Bedarf einstellbar. In den Hitzegrad geht außer dem Abstand zwischen dem Fleisch 18 bzw. dem Fleischspieß und der beheizten Grillplatte 5 die Energiezufuhr zu der beheizten Grillplatte ein.

Mit der Bräunungsgradsteuereinrichtung 42 und der Messerbetätigungssteuereinrichtung 32 wird in Verbindung mit der mechanischen Konstruktion des Grills erreicht, daß Gyros oder dergleichen mit dem gewünschten gleichbleibenden Gargrad in vorgegebener Dicke selbsttätig geschnitten wird.

## Patentansprüche

1. Grill mit einem motorisch drehbaren Fleischspieß für Gyros oder dergleichen mit einem parallel zu dem Fleischspieß (3) motorisch verfahrbaren Messer (19), welches geeignet ist, äußere Schichten von auf den Fleischspieß (3) gespießtem Fleisch (18) abzutrennen, wobei ein radialer Abstand zwischen dem Fleischspieß (3) und dem Messer (19) motorisch einstellbar ist und wobei ein mit einem Messerhalter (20) in Verbindung stehender Messerabstandsensor (28) und eine Messerbetätigungssteuereinrichtung (32) vorgesehen sind,
**dadurch gekennzeichnet,**
daß ein Bräunungssensor (27) benachbart zu dem Fleischspieß (3) angeordnet und auf diesen gerichtet ist, daß der Messerabstandsensor (28) zusammen mit dem Messer (19) radial zu dem Fleischspieß (3) einstellbar ist, daß die Eingänge (33,34) der Messerbetätigungssteuereinrichtung (32) mit dem Bräunungssensor (27) und dem Messerabstandsensor (28) verbunden sind, und daß die Messerbetätigungssteuereinrichtung (32) so eingerichtet ist, daß bei einem mit dem Bräunungssensor (27) erfaßten Bräunungsgrad das Messer (19) mit dem Messerhalter (20) radial zu dem Fleischspieß (3) eingestellt wird, bis das Messer (19) um einen vorgebenen Abstand in das auf den Fleischspieß (3) gesteckte Fleisch (18) eintritt und daraufhin das Messer (19) mit dem Messerhalter (20) motorisch parallel zu dem Fleischspieß (3) in einer Längesbewegungsbahn (22) verfahren wird.

2. Grill nach Anspruch 1,
**dadurch gekennzeichnet,**
daß in der Längsbewegungsbahn (22) des Messerhalters (20) Endschalter (35,35a) angeordnet sind, die an einem Eingang der Messerbetätigungssteuereinrichtung angeschlossen sind, und daß die Messerbetätigungssteuereinrichtung (32) dergestalt ausgebildet ist, daß das Fahren des Messerhalters (20) in Längsrichtung (22) umgekehrt wird, wenn der Messerhalter (20) einen vorgegebenen Abstand zu dem Endschalter (35,35a) erreicht hat.

3. Grill nach Anspruch 1 oder 2,
**dadurch gekennzeichnet,**
daß der radiale Abstand zwischen dem Messer (19) und dem mit einem ersten Motor (10) drehbaren Fleischspieß (3) über ein Schneckengetriebe (29) durch einen zweiten Motor (30) einstellbar ist.

4. Grill nach einem der vorangehenden Ansprüche,
**dadurch gekennzeichnet,**
daß der Messerhalter (20) auf einer parallel zu dem Fleischspieß (3) angeordneten ortsfesten Führungsschiene (21) verschiebbar ist, daß an dem Messerhalter (20) ein Seilzug (23) angebracht ist, der über zwei Umlenkrollen (24,25) umgelenkt ist und mit einem dritten Motor (26) verbunden ist, der, von der Messerbetätigungssteuereinrichtung (32) gesteuert, den Messerhalter (20) mit dem Messer (19) in Längsrichtung verfährt.

5. Grill nach einem der vorangehenden Ansprüche,
**dadurch gekennzeichnet,**
daß das Messer (19) ein Rotiermesser ist.

6. Grill nach einem der vorangehenden Ansprüche, bei dem der Fleischspieß in zwei Seitenrahmenteilen (1,2) gelagert ist und parallel in einem Abstand zu dem Fleischspieß (3) eine beheizbare Grillplatte (5) angeordnet ist,
**dadurch gekennzeichnet,**
daß die beiden Seitenrahmenteile (1,2) Führungen aufweisen, in denen der Abstand des Fleischspießes (3) zu der Grillplatte (5) motorisch einstellbar ist.

7. Grill nach Anspruch 6,
**dadurch gekennzeichnet,**
daß je ein Lager (12,13) an jedem Ende des Fleischspießes (3) in je einer Nut (4) in jedem Seitenrahmenteil (1,2) verschiebbar ist und daß jedes Lager (12,13) mit einer geschlossenen Seilwinde (14) in Verbindung steht, die mit einem Seilwindenmotor (17) antreibbar ist.

8. Grill nach Anspruch 7,
**dadurch gekennzeichnet,**
daß jeder Seilwindenmotor (17) von einer Bräunungsgradsteuereinrichtung (42) gesteuert ist, deren Eingang (33) mit dem auf den Fleischspieß (3) gerichteten Bräunungssensor (27) beaufschlagt wird.

9. Grill nach Anspruch 7 oder 8,
**dadurch gekennzeichnet,**
daß der erste, den Fleischspieß drehende Motor (10) über ein offenes Zahnradgetriebe (11) mit dem Fleischspieß (3) lösbar gekuppelt ist und daß der erste Motor (10) zusammen mit dem Fleischspieß (3) den Abstand zu der Grillplatte (5) verändernd verschiebbar ist.

10. Grill nach einem der vorangehenden Ansprüche,
**dadurch gekennzeichnet,**
daß er ein im wesentlichen geschlossenes Gehäuse aufweist, welches eine Lüftungsöffnung (9) sowie eine öffenbare Glashaube (8) umfaßt.

11. Grill nach Anspruch 10,
**dadurch gekennzeichnet,**
daß wenigstens ein von außerhalb des Gehäuses betätigbares Einstellorgan (41a) vorgesehen ist, welches mit der Drehsteuereinrichtung (39) elektrisch verbunden ist und mit welchem verschiedene Drehgeschwindigkeiten des ersten, mit dem Fleischspieß gekuppelten Motors (10) einstellbar sind.

12. Grill nach Anspruch 11,
**dadurch gekennzeichnet,**
daß wenigstens ein weiteres Einstellorgan (41a) an einem Eingang (43) der Bräunungsgradsteuereinrichtung (42) angeschlossen ist.

## Claims

1. Grill with a meat spike rotated by a motor for Gyros (kebabs) or similar, with a knife (19) which can be moved parallel to the meat spike (3) by a motor and which is suitable for cutting off outer layers of the meat on the spike (3), whereby a radial distance between the meat spike (3) and the knife (18) can be adjusted using the motor, whereby a knife distance sensor (28) connected to a knife holder (20) and a knife action control device (32) are also fitted
**characterised in that**
a browning sensor (27), is arranged adjacent to the meat spike (3) and is directed towards the latter, that the knife distance sensor (28) together with the knife (19) is adjustable radially in respect of the meat spike (3), that the inputs (33, 34) of the knife action control device (32) are connected to the browning sensor (27) and the knife distance sensor (28), and that the knife action control device (32) is set up in such a way that at a certain level of browning collected by the browning sensor (27), the knife (19) with the knife holder (20) is adjusted radially in respect of the meat spike (3) until the knife (19) enters a preset distance Into the meat (18) placed on the meat spike (3) and then the knife (19) with the knife holder (20) is moved by the motor in a longitudinal path (22) parallel to the meat spike (3).

2. Grill according to claim 1
**characterised in that**
limit switches (35, 35a) are arranged in the longitudinal movement path (22) of the knife holder (20), which are connected to one input of the knife activation control device and that the knife activation control device (32) is designed in such a way that the movement of the knife holder (20) in the longitudinal direction (22) is reversed when the knife holder (20) has reached a preset distance from the limit switch (35, 35a).

3. Grill according to claim 1 or 2
**characterised in that**
the radial distance between the knife (19) and the meat spike (3), which can be rotated by a first motor (10), can be adjusted via a worm gear (29) by a second motor (30).

4. Grill according to one of the preceding claims
**characterised in that**
the knife holder (20) is arranged so that it slides on a fixed guide rail (21) arranged parallel to the meat spike (3), that a cable line (23) is attached to the knife holder (20) which is routed via two guide rollers (24, 25) and connected to a third motor (25), which, controlled by the knife action control device (32) moves the knife holder (20) with the knife (19) in a longitudinal direction.

5. Grill according to one of the preceding claims
**characterised in that**
the knife (19) is a rotating knife.

6. Grill according to one of the preceding claims in which the meat spike is mounted in two side frame components (1, 2) and a heatable grill plate (5) is arranged in a parallel position at a distance from the meat spike (3)
**characterised in that**
the two side frame components (1, 2) have guides by means of which the distance between the meat spike (3) and the grill plate (5) can be adjusted by a motor.

7. Grill according to claim 6
**characterised in that**
one bearing respectively (12, 13) on each end of the meat spike (3) can be moved in one groove respectively (4) in each side frame component (1, 2) and that each bearing (12, 13) is connected to an enclosed cable which (14) which can be driven by a cable winch motor (17).

8. Grill according to claim 7
**characterised in that**
each cable winch motor (17) is controlled by a browning level device (42), the input (33) of which is received from the browning sensor (27) directed towards the meat spike (3).

9. Grill according to claim 7 or 8
**characterised in that**
the first motor (10), which turns the meat spike, is connected to the meat spike (3) in a detachable manner via an open gear wheel system (11) and that the first motor (10), can be moved together with the meat spike (3) changing the distance from the grill plate (5).

10. Grill according to one of the preceding claims
**characterised in that**
it has a housing, closed for the most part, which includes a ventilation aperture (9) and a glass hood (8) which can be opened.

11. Grill according to claim 10
**characterised in that**
at least one adjuster unit (41a) is fitted, which can be activated from outside the housing and which is connected electrically to the rotation control device (39) and with which different speeds of rotation can be set for the first motor (10), connected to the meat spike.

12. Grill according to claim 11
**characterised in that**
at least one further adjuster unit (41a) is connected to an input (43) of the browning level control device (42).

## Revendications

1. Gril comprenant une brouche à viande rotative de manière motorisée, pour gyros ou similaires, et comprenant un couteau (19) qui peut être déplacé, de manière motorisée, parallèlement à la broche à viande (3) et qui est apte à détacher des couches extérieures de la viande (18) embrocher sur la broche à viande (3), un écartement radial entre la broche à viande (3) et le couteau (19) pouvant être réglé de manière motorisée, et un détecteur d'écartement de couteau (28), lié à un support de couteau (20), ainsi qu'un dispositif (32) de commande d'actionnement du couteau étant prévus,
caractérisé en ce qu'un détecteur de (27) est disposé au voisinage de la broche à viande (3) et est dirigé vers celle-ci, en ce que le détecteur d'écartement de couteau (28) est ajustable radialement, conjointement avec le couteau (19), par rapport à la broche à viande (3), en ce que les entrées (33, 34) du dispositif (32) de commande d'actionnement du couteau sont reliées au détecteur d'état de rôtissage (27) et au détecteur d'écartement de couteau (28), et en ce que le dispositif (32) de commande d'actionnement du couteau est conçu de manière telle, que pour un degré de rôtissage relevé par le détecteur d'état de rôtissage (27), le couteau (19) avec le support de couteau (20) soit ajusté radiale vers la broche à viande (3), jusqu'à ce que le couteau (19) pénètre d'une distance prédéterminée dans la viande (18) plantée sur la broche à viande (3), le couteau étant ensuite déplacé avec le support de couteau (20), de manière motorisée, parallèlement à la broche à viande (3), sur une trajectoire longitudinale (22).

2. Gril selon la revendication 1, caractérisé en ce que dans la trajectoire longitudinale (22) du support de couteau (20), sont disposés des contacteurs de fin de course (35, 35a) qui sont connectés à une entrée du dispositif de commande d'actionnement du couteau, et en ce que le dispositif (32) de commande d'actionnement du couteau est conçu de telle sorte que le déplacement du support de couteau (20), dans la direction longitudinale, soit inversé lorsque le support de couteau (20) est arrivé à (22) une distance prédéterminée du contacteur de fin de course (35, 35a).

3. Gril selon la revendication 1 ou 2, caractérisé en ce que l'écartement radial entre le couteau (19) et la broche à viande (3), qui peut être mise en rotation par un premier moteur (10), est réglable par l'intermédiaire d'une transmission à vis sans fin (29) au moyen d'un deuxième moteur (30).

4. Gril selon l'une des revendications précédentes, caractérisé en ce que le support de couteau (20) peut coulisser sur un rail de guidage fixe (21) dIsposé parallèlement à la broche à viande (3), en ce que sur le support de couteau (20) est placé un câble de traction (23) qui passe sur deux poulies de renvoi (24, 25) et est relié à un troisième moteur (26), qui, en étant commandé par le dispositif (32) de commande d'actionnement du couteau, déplace en direction longitudinale, le support de couteau (20) avec le couteau (19).

5. Gril selon l'une des revendications précédentes, caractérisé en ce que le couteau (19) est un couteau.

6. Gril selon l'une des revendications précédentes, dans lequel la broche à viande est montée en rotation dans deux parties de châssis latérales (1, 2) et dans lequel une plaque de gril chauffante (5) est disposée parallèlement et à distance de la broche à viande (3),
caractérisé en ce que les deux parties de châssis latérales (1, 2) comportent des guides dans lesquels, l'écartement de la broche à viande (3) par rapport à la plaque de gril (5) peut être réglé de manière motorisée.

7. Gril selon la revendication 6, caractérisé en ce qu'un palier respectif (12, 13) à chaque extremité de la broche à viande (3) peut coulisser dans une rainure respective (4), dans chaque partie de châssis latérale (1, 2), et en ce que chaque palier (12, 13) est relié à un système de traction à câble fermé (14) pouvant être entraîné par un moteur de câble (17).

8. Gril selon la revendication 7, caractérisé en ce que chaque moteur de câble (17) est commandé par un dispositif de commande du degré de rôtissage (42), dont l'entrée (33) est excitée par le détecteur d'état de rôtissage (27) dirigé vers la broche à viande (3).

9. Gril selon la revendication 7 ou 8, caractérisé en ce que le premier moteur (10) faisant tourner la broche à viande, est accouplé de manière séparable à la broche à viande (3) par l'intermédiaire d'un engrenage ouvert (11), et en ce que le premier moteur (10) peut coulisser eu commun avec la broche à viande (3), en modifiant l'écartement par rapport à la plaque de gril (5).

10. Gril selon l'une des revendications précédentes, caractérisé en ce qu'il comporte un carter sensiblement fermé qui comprend une ouverture de ventilation (9) ainsi qu'un capot vitré (8) ouvrant.

11. Gril selon la revendication 10, caractérisé en ce qu'il est prévu au moins un organe de réglage (41a) qui peut être actionné de l'extérieur du carter, est relié électriquement au dispositif de commande de rotation (39), et à l'aide duquel peuvent être réglées différentes vitesses de rotation du premier moteur (10) accouplé à la broche à viande.

12. Gril selon la revendication 11, caractérisé en ce qu'au moins un autre organe de réglage (41a) est raccordé à une entrée (43) du dispositif de commande du degré de rôtissage (42).
